# EUROPEAN PATENT SPECIFICATION

(11) **EP 4 546 258 B1**
(45) Date of publication and mention of the grant of the patent: **09.09.2026**
(21) Application number: 24205950.9
(22) Date of filing: 10.10.2024
(51) Int. Cl.: G06T 7/00

(54) **IMAGE PROCESSING APPARATUS, PROCESSING METHOD FOR THE SAME, AND PROGRAM**
BILDVERARBEITUNGSVORRICHTUNG, VERARBEITUNGSVERFAHREN DAFÜR UND PROGRAMM
APPAREIL DE TRAITEMENT D'IMAGE, PROCÉDÉ DE TRAITEMENT ASSOCIÉ ET PROGRAMME

(30) Priority: 27.10.2023 JP 2023184821
(43) Date of publication of application: 30.04.2025
(73) Proprietor: Canon Kabushiki Kaisha, Ohta-ku Tokyo 146-8501 (JP)
(72) Inventor: MUTA, Hajime, Tokyo, 146-8501 (JP); SAITO, Sho, Tokyo, 146-8501 (JP); MATSUSHITA, Masahiro, Tokyo, 146-8501 (JP); FUKAMACHI, Hitoshi, Tokyo, 146-8501 (JP); YOSHIMURA, Shozo, Tokyo, 146-8501 (JP)
(74) Representative: Canon Europe Limited

(56) References cited:
- US-A1- 2022 067 419
- LUO WEIXIN ET AL: "Remembering history with convolutional LSTM for anomaly detection", 2017 IEEE INTERNATIONAL CONFERENCE ON MULTIMEDIA AND EXPO (ICME), IEEE, 10 July 2017 (2017-07-10), pages 439 - 444, XP033146508, DOI: 10.1109/ICME.2017.8019325
- FAN HEHE ET AL: "Watching a Small Portion could be as Good as Watching All: Towards Efficient Video Classification", PROCEEDINGS OF THE TWENTY-SEVENTH INTERNATIONAL JOINT CONFERENCE ON ARTIFICIAL INTELLIGENCE, 1 July 2018 (2018-07-01), California, pages 705 - 711, XP093260091, ISBN: 978-0-9992411-2-7, DOI: 10.24963/ijcai.2018/98

## Description

### BACKGROUND OF THE INVENTION

### Field of the Invention

The present disclosure relates to an image processing apparatus, a processing method for the image processing apparatus, and a program.

### Description of the Related Art

There is a recently proposed apparatus that uses a neural network to improve the quality of images captured by cameras and other devices. The use of a neural network makes it possible to provide image quality improvement processing, such as noise reduction and super resolution, with high performance and high speed compared with the related art.

In particular, real-time image quality improvement processing performance is called for in moving images. Recurrent neural networks (RNN) are widely used as a method for providing the real-time performance of moving images.

An RNN has, as a feature, a structure for recurrently inputting output results or history information from the RNN to the RNN. This feature makes it possible to perform processing on time-series data of an arbitrary length using a single neural network.

A RNN has a recurrent structure, which eliminates the need for preparing a neural network corresponding to time-series data, resulting in reduction of the size of the neural network. This allows high-speed processing or real-time processing.

Japanese Patent Application Laid-Open Publication No. 2021-149333 discusses an image processing apparatus that uses an RNN to provide neural network operation processing with small latency and at low cost.

Japanese Patent Application Laid-Open Publication No. 2006-3743 discusses an apparatus that retrieves a history produced by history generation processing when processing is resumed after being suspended, and determines whether input information in the retrieved history is still available or unavailable. If the input information is unavailable, the apparatus does not use the input information in the history.

The prior art of record also comprises document US 2022/0067419 A1, which discloses an image processing apparatus and method that extracts features from input images using a convolutional neural network (CNN), updates a hidden state using a recurrent neural network (RNN), and generates an image processing result based on the updated state. The document corresponds to the preamble of claim 1.

### SUMMARY OF THE INVENTION

According to a first aspect of the present invention, there is provided an image processing apparatus as specified in claims 1 to 16. According to a second aspect of the present invention, there is provided a processing method as specified in claim 17. According to a third aspect of the present invention, there is provided a program as specified in claim 18.

Further features of the present invention will become apparent from the following description of embodiments with reference to the attached drawings.

### BRIEF DESCRIPTION OF THE DRAWINGS

Fig. 1 is a block diagram illustrating a hardware configuration example of an image processing apparatus.
Fig. 2 is a block diagram illustrating a functional configuration example of the image processing apparatus.
Figs. 3A and 3B are flowcharts each illustrating an example of a processing flow of the image processing apparatus.
Figs. 4A and 4B each illustrate an example of processing performed by an information processing unit.
Fig. 5 illustrates an example where a neural network is used.
Fig. 6 illustrates another example of a processing flow of the image processing apparatus.
Fig. 7 illustrates an example where a neural network is used.
Figs. 8A and 8B each illustrate an example of a user interface.

### DESCRIPTION OF THE EMBODIMENTS

Neural networks, such as recurrent neural networks (RNNs), provide complicated processing, such as image quality improvement processing, with high performance and high speed. On the other hand, neural networks tend to increase arithmetic operations. More arithmetic operations consume more power of the apparatus.

Some recent moving bodies, such as vehicles, ships, aircrafts, and drones, include an edge device for processing images captured by cameras or other devices. The use of such an edge device leads to the demand for reduced power consumption to save fuels for batteries and generators.

To reduce power consumption, functions of an apparatus will be temporarily turned off when the functions become unnecessary, and turned on immediately when the functions become necessary.

With an RNN for processing in use, the RNN has a structure for recurrently inputting a previous output result or history information to the RNN. Thus, making full use of the performance of the RNN involves continuously inputting images or other data to the RNN.

However, if the RNN operation is suspended due to power consumption or other reasons, history information becomes old or will not be updated, preventing the RNN from operating with its full performance when the RNN operation is resumed.

In particular, moving images with low frame rate, which are often found in monitoring cameras, entails longer processing intervals, which leads to a longer period during which the RNN cannot operate with its full performance when the RNN operation is resumed. This can cause, for example, screen flicker or missing a target to be monitored moving at high speed (a running person, a running vehicle, etc.).

On the other hand, to avoid screen flicker or missing a target to be monitored, it is conceivable that the RNN processing is constantly operated. This will cause large power consumption all the time, making it difficult to use the apparatus for a long period of time under an environment in which a battery or a generator is used.

In the method discussed in Japanese Patent Application Laid-Open Publication No. 2006-3743, history information can be deleted, which means no history information available when processing is resumed, preventing the processing with its full performance immediately after the processing is resumed.

The present disclosure is directed to appropriate processing with an information processing unit in operation and history information unavailable.

Embodiments of the present disclosure will be described in detail with reference to the drawings. Configurations described in the following embodiments are merely examples, and the present invention is not limited to these configurations.

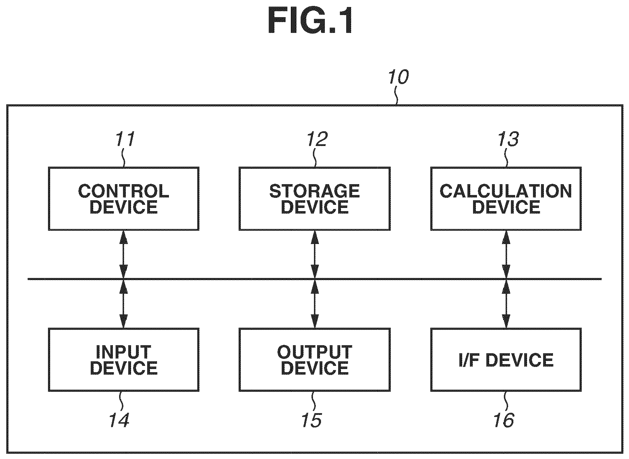

Fig. 1 is a block diagram illustrating a hardware configuration example of an image processing apparatus 10 according to an embodiment of the present invention. The image processing apparatus 10 includes, as a hardware configuration, a control device 11, a storage device 12, a calculation device 13, an input device 14, an output device 15, and an interface (I/F) device 16.

The control device 11 generally controls the operation of the image processing apparatus 10. The storage device 12 holds programs and data to be used for operation of the control device 11. The calculation device 13 executes arithmetic processing under the control of the control device 11.

The input device 14, such as a human interface device, is used to input user operations to the image processing apparatus 10. The output device 15, such as a display, presents processing results from the image processing apparatus 10 and other information to a user.

The I/F device 16 is a wired interface, such as a universal serial bus (USB), Ethernet, or an optical cable, or a wireless interface, such as Wireless Fidelity (Wi-Fi^{®}) or Bluetooth^{®}. The I/F device 16 has functions of, for example, connecting to a camera or other devices to input captured images to the image processing apparatus 10, transmitting processing results acquired at the image processing apparatus 10 to an external device, and inputting programs, data, and other information to be used for operation of the image processing apparatus 10 to the image processing apparatus 10. The camera is, for example, a video camera or a security camera.

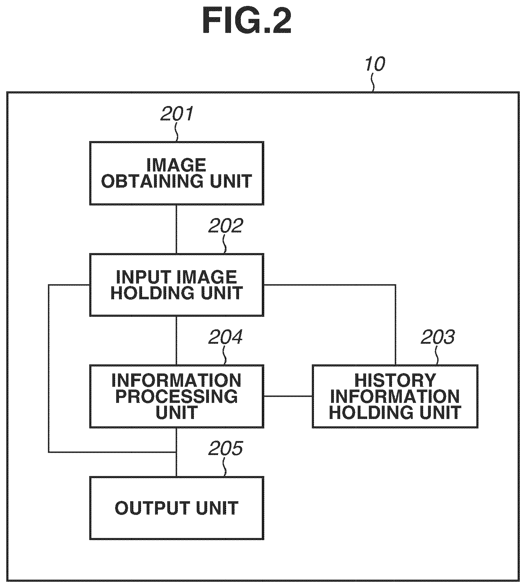

Fig. 2 is a block diagram illustrating a functional configuration example of the image processing apparatus 10 according to the present embodiment. The image processing apparatus 10 includes, as a functional configuration, an image acquisition unit 201 (or image obtaining unit), an input image holding unit 202, a history information holding unit 203, an information processing unit 204, and an output unit 205.

The image acquisition unit 201 acquires, as input images, images on which image processing is to be performed by the image processing apparatus 10.

The input image holding unit 202 holds the input images acquired by the image acquisition unit 201. The history information holding unit 203 holds history information.

The information processing unit 204 executes information processing using input images held in the input image holding unit 202 and history information held in the history information holding unit 203 to generate information-processed images and updated history information.

If it is determined that history information held in the history information holding unit 203 before the operation of the information processing unit 204 is unavailable, the history information holding unit 203 regenerates history information based on an input image held in the input image holding unit 202, and holds the regenerated history information as new history information.

The term "regeneration" as used herein refers to a process of discarding history information held in the history information holding unit 203 when it is determined that the history information held in the history information holding unit 203 is unavailable and regenerating history information alone based on the input image held in the input image holding unit 202.

The history information holding unit 203 receives the updated history information generated by the information processing unit 204, and holds the updated history information as new history information.

When the information processing unit 204 is in operation, the output unit 205 outputs information-processed images generated by the information processing unit 204, and when the information processing unit 204 is out of operation, the output unit 205 outputs input images held in the input image holding unit 202.

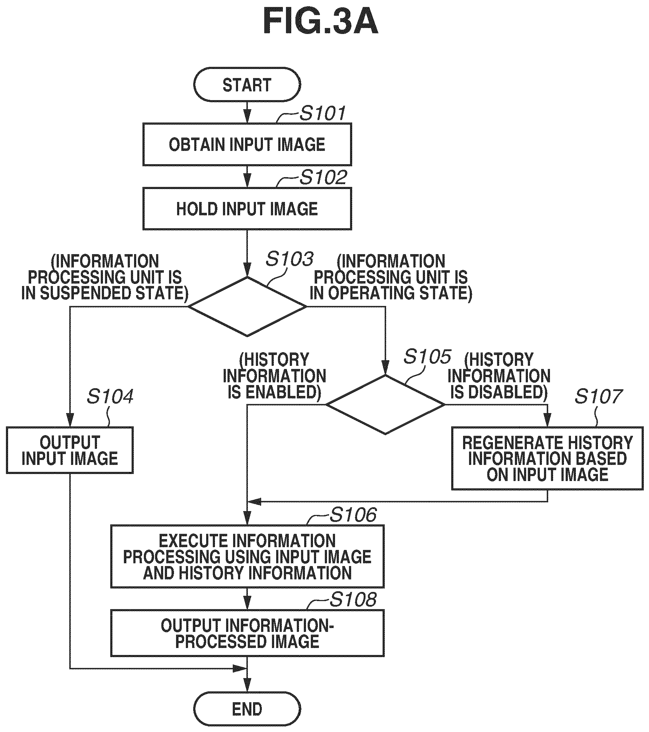

Fig. 3A is a flowchart illustrating an example of a processing method for the image processing apparatus 10 according to the present embodiment.

In step S101, the image acquisition unit 201 acquires an image subject to image processing by the image processing apparatus 10 as an input image. Examples of the input image include a streaming image, a moving image file, a series of image files stored for each frame, and moving images or images stored in media.

The image acquisition unit 201 can acquire input images from a solid-state image sensor, such as a complementary metal-oxide semiconductor (CMOS) sensor, a charge-coupled device (CCD) sensor, or a single-photon avalanche diode (SPAD) sensor, a camera or another device including such a solid-state image sensor, or can acquire input images from a storage device, such as a hard disk or a solid-state drive (SSD), or a recording medium. One or more components, cameras, storage devices, or recording media can be used to acquire input images.

In step S102, the input image holding unit 202 holds the input image acquired by the image acquisition unit 201. The input image holding unit 202 can hold a single latest image, or a plurality of images in chronological order.

The input image holding unit 202 can set an upper limit for the number of images to be held to discard images in chronological order when the number of images to be held exceeds the upper limit. If the information processing unit 204 uses a plurality of images to execute information processing, the number of images to be used by the information processing unit 204 can be set as the upper limit.

The upper limit can be set to a value greater than the number of images to be used by the information processing unit 204 so as to prevent writing of the input image acquired by the image acquisition unit 201 to the input image holding unit 202 from competing with reading of the input image by the information processing unit 204 from the input image holding unit 202.

For example, if one input image acquired by the image acquisition unit 201 is written to the input image holding unit 202 and the information processing unit 204 uses three images to execute information processing, the input image holding unit 202 can be set to hold at least four images.

Further, the upper limit for the number of images to be held can be additionally increased to prevent skipped processing due to a delay in the subsequent processing. For example, if skipped processing up to 20 frames in moving images is allowed, the input image holding unit 202 can be set to additionally store 20 frames.

The input image holding unit 202 can hold additional images corresponding to the number of images to be used in regenerating history information in step S107. For example, if images corresponding to three consecutive frames are used in regenerating history information in step S107, the input image holding unit 202 can additionally store images corresponding to three frames. In this case, the input image holding unit 202 holds at least the number of input images used for the information processing unit 204 to regenerate history information.

With a latency in processing from step S105 to step S108, the input image holding unit 202 can additionally hold images corresponding to the latency. For example, if the latency corresponds to three frames, the input image holding unit 202 can hold only one image before the three frames, or can additionally hold three frames. In this case, the input image holding unit 202 holds at least the number of input images corresponding to the number of latencies in the information processing unit 204.

The input image holding unit 202 desirably stores the input image acquired by the image acquisition unit 201 and an identifier for uniquely identifying the input image at once. Examples of the identifier include the image capturing time.

The identifier desirably indicates the chronological order of input images. Examples of the identifier include a frame number and a serial number. A frame number and a serial number can be acquired from, for example, a camera including a solid-state image sensor, a storage device, such as a hard disk or an SSD, or a recording medium. In the input image holding unit 202, a time can be assigned, or a unique number can be generated.

In step S103, the image processing apparatus 10 determines the state of the information processing unit 204. The state of the information processing unit 204 is a state where the information processing unit 204 is suspended, or a state where the information processing unit 204 is in operation.

The state where the information processing unit 204 is suspended indicates a state where the information processing unit 204 cannot start new processing, and the state where the information processing unit 204 is in operation indicates a state where the information processing unit 204 can start new processing.

Also, when the information processing unit 204 is waiting for processing, for example, initialization, and reset due to an option change, or is waiting for completion of information processing, the information processing unit 204 cannot start new processing, and thus it is determined that the information processing unit 204 is suspended.

Also, when the information processing unit 204 skips processing, that is, an input image is output not subjected to information processing, no input image is supplied to the information processing unit 204. Thus, the information processing unit 204 cannot start new processing, and it is determined that the information processing unit 204 is suspended.

As a result of the determination described above, if the information processing unit 204 is suspended, the processing proceeds to step S104, and if the information processing unit 204 is in operation, the processing proceeds to step S105.

In step S104, the output unit 205 outputs the input image held in the input image holding unit 202.

If the input image holding unit 202 holds one input image, the output unit 205 outputs the input image. If the input image holding unit 202 holds two or more input images, the output unit 205 outputs one of the input images held in the input image holding unit 202.

One of the images to be output is, for example, the older or oldest image in the chronological order of the input images held in the input image holding unit 202.

With a latency in the processing from step S105 to step S108, the output unit 205 can acquire the number of previous images corresponding to the latency from the input image holding unit 202 to output the acquired image(s).

Matching the latency in the processing of step S104 with the latency in the processing of step S105 and subsequent steps eliminates losing or skipping a frame when the processing in step 103 is switched in moving image processing.

With an identifier assigned to the output image, the output unit 205 can output the identifier and the image at once.

In step S105, the history information holding unit 203 determines whether the held history information is available or unavailable. If the history information is available, the processing proceeds to step S106. If the history information is unavailable, the processing proceeds to step S107.

In step S106 subsequent to step S105, the information processing unit 204 executes information processing using the input image held in the input image holding unit 202 and the history information held in the history information holding unit 203 to generate an information-processed image and updated history information.

In step S106, if the history information held in the history information holding unit 203 is older in chronological order than intended by the information processing unit 204, the processing of the information processing unit 204 cannot be performed as intended, which can cause low processing accuracy, a defective output, or a lost output.

Thus, in step S105, it is determined whether the history information held in the history information holding unit 203 is older in the chronological order than intended by the information processing unit 204, whereby it is determined whether the history information is available or unavailable. Then, the subsequent processing is branched based on the determination result.

In the above-described determination, if the history information is older in the chronological order than intended by the information processing unit 204, it is determined that the held history information is unavailable. If the history information is not older than intended by the information processing unit 204, it is determined that the held history information is available.

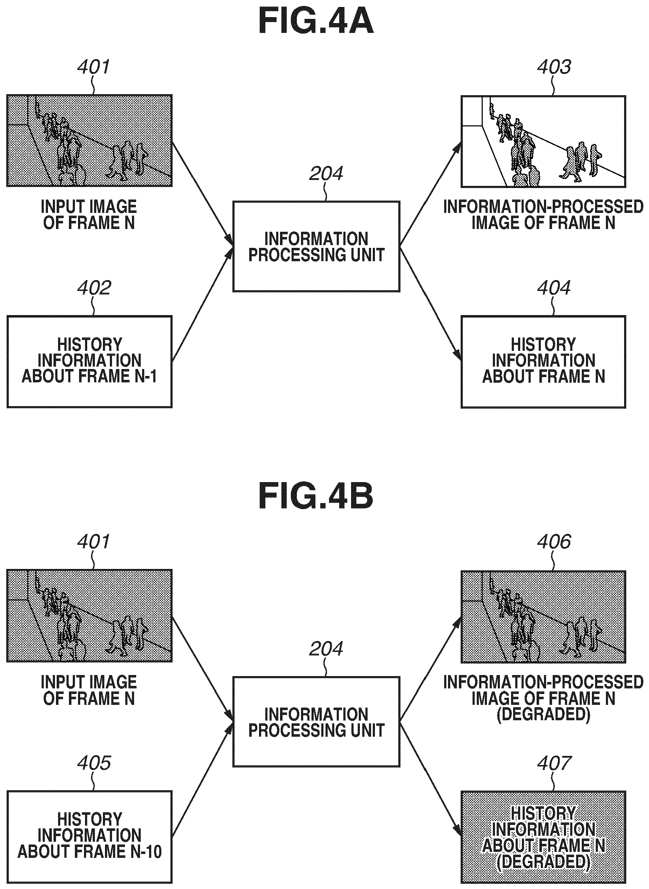

For example, in an example illustrated in Fig. 4A, the information processing unit 204 is designed to use an image 401 of a current frame N as an input image and to use history information 402 about a frame N-1 immediately before the current frame N.

As illustrated in Fig. 4A, the image 401 of the frame N and the history information 402 about the frame N-1 are input to the information processing unit 204, so that a processing result 403 of the image of the current frame N and history information 404 about the frame N are generated.

It herein is assumed that a frame number is assigned as an identifier to the input image held in the input image holding unit 202.

Fig. 4B illustrates an example where the information processing unit 204 operates until a frame N-10, and immediately after the frame N-10, the information processing unit 204 is suspended, and is then in operation again during the processing on the frame N.

As illustrated in Fig. 4B, the image 401 of the frame N is input as an input image to the information processing unit 204, and history information 405 about the frame N-10 during the previous processing is input as history information.

The information processing unit 204 is designed to use the history information 402 about the frame N-1 immediately before the frame N when the image 401 of the frame N is input as the input image as illustrated in Fig. 4A.

However, in the example illustrated in Fig. 4B, the information processing unit 204 is suspended until the frame N-1 after the processing on the frame N-10, and thus history information about the frame N-1 immediately before the frame N is not present. If the history information 405 about the frame N-10, which is not supposed to be used, used for the input image 401 of the frame N, the information processing unit 204 cannot operate with its original performance, outputting a degraded information-processed image 406 and degraded history information 407 about the frame N.

In the example illustrated in Fig. 4B, the history information 405 about the frame N-10 held in the history information holding unit 203 indicates the frame that is older in the chronological order than the frame N-1 that is originally used, and thus it is determined that the history information 405 about the frame N-10 is unavailable.

On the other hand, if the information processing unit 204 is not suspended, as illustrated in Fig. 4A, at the time when the image 401 of the frame N is input as the input image, the history information holding unit 203 holds the history information 402 about the frame N-1 immediately before the frame N, and thus it is determined that the history information 402 is available.

In the example illustrated in Fig. 4B, if the history information is delayed by one or more frames, it is determined that the history information is unavailable. However, if processing is performed at a high frame rate, or if an object is moving at a low speed, a variation in images between adjacent frames is small, whereby there is a possibility that the processing can be performed even when the history information is delayed by several frames.

In this case, if the history information is delayed by M frames or more when M is set as a constant greater than 1, the history information can be determined to be old and thus unavailable, and if the history information is delayed by less than M frames, the history information can be determined to be not old and thus be available.

Specifically, when the history information held in the history information holding unit 203 is available, the history information is history information about a frame that is less than a threshold number of frames before the current frame. When the history information held in the history information holding unit 203 is unavailable, the history information is history information about a frame that is the threshold number of frames or more before the current frame.

In step S106, if the history information holding unit 203 includes no history information, the information processing unit 204 is not performed as intended, which can cause low processing accuracy, a defective output, or a lost output.

Thus, in step S105, if the history information holding unit 203 holds no history information, or if no history information is present, it can be determined that the history information is unavailable.

On the other hand, if the history information holding unit 203 holds history information, or if history information is present, for example, it can be determined whether the history information is old in the chronological order as described above to determine whether the history information is available or unavailable. Then, the subsequent processing can be branched based on the determination result.

If the input image is directly output, for example, by the processing of the information processing unit 204 being skipped, or not subjected to information processing, the history information held in the history information holding unit 203 is not updated, and thus the history information becomes old in the chronological order.

In this case, the history information holding unit 203 can delete the held history information that is old in the chronological order.

If the history information is deleted, in step S105, the history information holding unit 203 does not hold any history information, or no history information is present. Thus, it is determined that the history information is unavailable.

The history information holding unit 203 can hold an update flag indicating whether the history information is to be updated.

Examples of the case where the history information is to be updated include a case where the history information held in the history information holding unit 203 is not updated, for example, by the processing of the information processing unit 204 being skipped, and the history information becomes old in the chronological order.

The update flag can be represented by a truth-value that indicates "true", for example, when history information is to be updated, and indicates "false", for example, when history information is not to be updated.

For example, when the history information held in the history information holding unit 203 is updated, the update flag is set to "false", and when the history information held in the history information holding unit 203 is not updated, the update flag is set to "true".

In this case, in step S105, it is determined whether the history information is available or unavailable based on the update flag, and based on the determination result, the subsequent processing is branched.

For example, if the update flag indicates "true", it is determined that the history information is unavailable, and if the update flag indicates "false", it is determined that the history information is available.

In step S106, the information processing unit 204 executes information processing using the input image held in the input image holding unit 202 and the history information held in the history information holding unit 203 to generate an information-processed image and updated history information. Then, the processing proceeds to step S108.

The above-described information processing includes various types of known image processing. Examples of the various types of information processing include noise removal processing, super-resolution processing, sharpening processing, fog/haze removal processing, and dark area emphasis processing.

If an identifier is assigned to the input image, the information processing unit 204 assigns the identifier assigned to the input image to the information-processed image and the updated history information.

One or more input images and one or more information-processed images can be used.

The number of input images can be the same as or different from the number of information-processed images.

One or more pieces of history information and one or more pieces of updated history information can be used.

The number of pieces of history information can be the same as or different from the number of pieces of updated history information.

The information-processed image can be treated as updated history information. In this case, the information processing unit 204 need not necessarily output the updated history information.

The history information holding unit 203 holds the updated history information generated by the information processing unit 204 as new history information.

If an identifier is assigned to the updated history information, the history information holding unit 203 holds the identifier and the updated history information as new history information.

Examples of the method for executing information processing include machine learning and a neural network.

Examples of the machine learning method include a decision tree, random forest, and Light Gradient Boosting Machine (LightGBM).

Examples of the neural network include a convolutional neural network, a deconvolutional neural network, and an auto encoder in which a convolutional neural network and a deconvolutional neural network are connected.

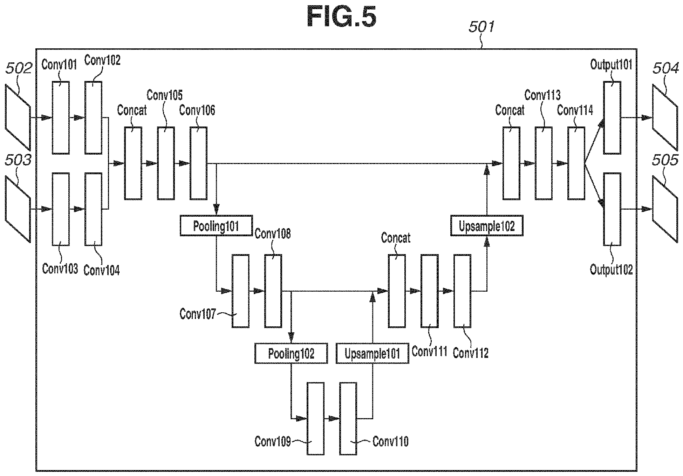

Fig. 5 illustrates an example where a neural network 501 is used in an information processing method for the information processing unit 204.

In the neural network 501 illustrated in the example of Fig. 5, "Conv" represents a convolution layer, "Pooling" represents a pooling layer, "Upsample" represents an upsampling layer, "Concat" represents a connection layer, and "Output" represents an output layer.

In the example illustrated in Fig. 5, an input image 502 held in the input image holding unit 202 and history information 503 held in the history information holding unit 203 are input to the neural network 501.

When the input image 502 is input to a Conv 101 of the neural network 501 and the history information 503 is input to a Conv 103, calculation processing is executed based on a processing procedure illustrated in Fig. 5.

After a completion of processing on the neural network 501, an information-processed image 504 is output from an Output 101 of the neural network 501, and updated history information 505 is output from an Output 102 of the neural network 501.

The information processing unit 204 can perform information processing using the neural network 501 illustrated in the example of Fig. 5 in multiple stages.

For example, when the neural network 501 is used in two stages, in the first stage, the information processing unit 204 generates updated history information about a frame N-1 using the input image of the frame N-1 and history information about the frame N-2.

In the second stage that ensues, the information processing unit 204 generates information-processed image of the frame N and updated history information about the frame N using the input image of the frame N and the history information about the frame N-1.

The information processing unit 204 can execute information processing using an RNN. The neural network 501 is an example of the RNN. For example, the RNN recurrently inputs the history information 505 about the previous output result as the history information 503 as the current input of the RNN. The history information 505 is, for example, the information-processed image generated by the information processing unit 204.

The information processing unit 204 can treat an intermediate output from machine learning or a neural network as history information as updated history information.

For example, in the example of the neural network 501 illustrated in Fig. 5, an output from any layer other than output layers of the Output 101 and the Output 102 included in the neural network 501 can be retrieved as the intermediate output, and the intermediate output can be treated as updated history information.

If the information processing unit 204 uses machine learning or a neural network in multiple stages, an output from any stage other than the last-stage machine learning or neural network can be retrieved as the intermediate output and, the intermediate output can be treated as updated history information.

For example, if the neural network 501 illustrated in Fig. 5 is used in two stages, in the first stage, the output acquired from the output layer the Output 101 or the Output 102 can be retrieved as the intermediate output using an input image of the frame N-1 and history information about the frame N-2, and the intermediate output can be treated as updated history information.

In step S107, the information processing unit 204 regenerates history information based on the input image held in the input image holding unit 202, and then the processing proceeds to step S106. In this case, if an identifier is assigned to the input image, the information processing unit 204 assigns the identifier assigned to the input image to the regenerated history information.

One or more input images can be used. One or more pieces of updated history information can be used.

Examples of the method for regenerating history information include a method of inputting the input image held in the input image holding unit 202 and temporary history information to the information processing unit 204, executing information processing, discarding the information-processed image, and acquiring the updated history information alone.

In other embodiments, the information-processed image is treated as updated history information, instead of discarding the information-processed image. In this case, the information processing unit 204 need not necessarily output the updated history information.

As the temporary history information, for example, the latest history information held in the history information holding unit 203 can be used or the input image held in the input image holding unit 202 can be used, during the execution of the processing of step S107.

Other examples of the temporary history information include a solid image, a pattern image, and a noise image.

The history information holding unit 203 holds the regenerated history information as new history information. If an identifier is assigned to the regenerated history information, the history information holding unit 203 holds the identifier together with the regenerated history information as new history information.

In some cases, it takes a long time to regenerate history information in step S107. Thus, for example, with the processing illustrated in Fig. 3A being performed at predetermined time intervals, when the processing of step S107 is started, the overall processing appears to be temporarily stopped.

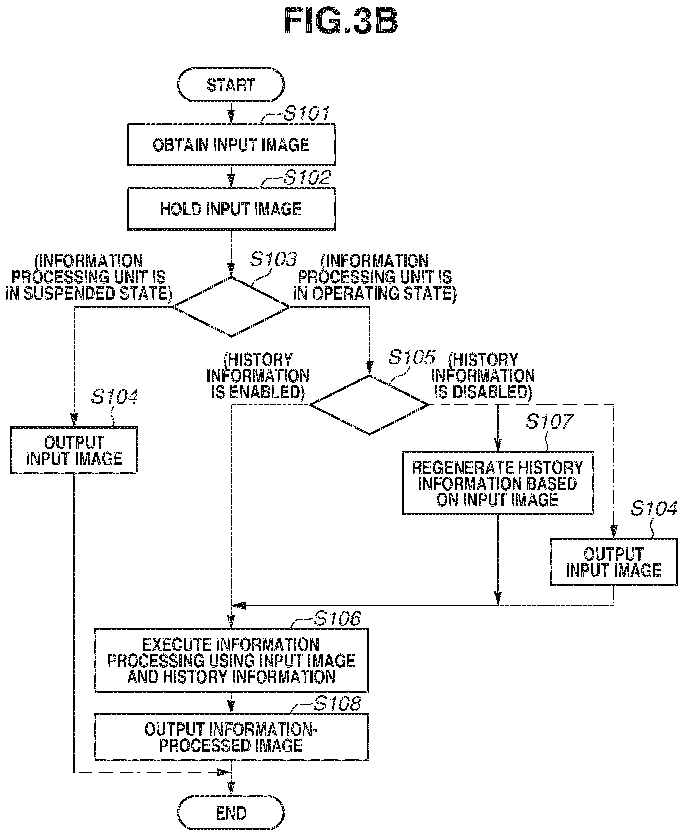

In such a case, as illustrated in the example of Fig. 3B, the image processing apparatus 10 can perform processing of step S 104 in parallel with processing of step S107. Specifically, the image processing apparatus 10 can perform processing of step S104 in parallel until the processing of step S107 is completed and the processing of step S106 is resumed, and directly output the input image.

The execution of the processing of step S107 will lead to an increase of the processing to be performed by the image processing apparatus 10. This will increase the processing time due to the execution of processing of step S107, which can cause a delay in processing.

In such a case, the image processing apparatus 10 can resolve a delay in processing due to the execution of processing of step S107. Examples of the method for resolving the delay include a method of performing the processing of step S107 in another thread, and a method of temporarily increasing the processing frame rate.

In step S105, if it is determined that the history information held in the history information holding unit 203 is unavailable, supposing the processing of step S107 is skipped, in step S106, the information processing unit 204 would execute information processing using unavailable history information.

Unavailable history information hinders the information processing unit 204 from performing with its full performance. This can cause screen flicker and deteriorated accuracy during the image processing on a moving image, resulting in missing a target to be monitored due to screen flicker and deteriorated accuracy.

Thus, for the information processing unit 204 to perform with its full performance, it is necessary that the information processing unit 204 be constantly in operation with latest history information.

Thus, this will prevent the information processing unit 204 from being suspended at unnecessary times, disallowing the power consumption to be reduced, so that the information processing unit 204 cannot be used for a long period of time under the environment in which a battery or a generator is used.

On the other hand, in step S105, if it is determined that the history information held in the history information holding unit 203 is unavailable and the processing of step S106 is executed after the processing of step S107, the information processing unit 204 can execute information processing using regenerated latest history information or available history information. In step S106, the information processing unit 204 executes information processing using the input image and the regenerated history information to generate an information-processed image, and updates the history information held in the history information holding unit 203.

The available history information allows the information processing unit 204 to perform with its full performance. This prevents screen flicker or a deteriorated accuracy during the image processing on a moving image from occurring, not causing a target to be monitored to be missed due to screen flicker or deteriorated accuracy.

With the history information unavailable, regenerated latest history information is used, which eliminates the need that the information processing unit 204 be constantly in operation.

This allows the information processing unit 204 to be suspended at unnecessary times, reducing the power consumption, permitting the information processing unit 204 to be used for a period of time even under the environment in which a battery or a generator is used.

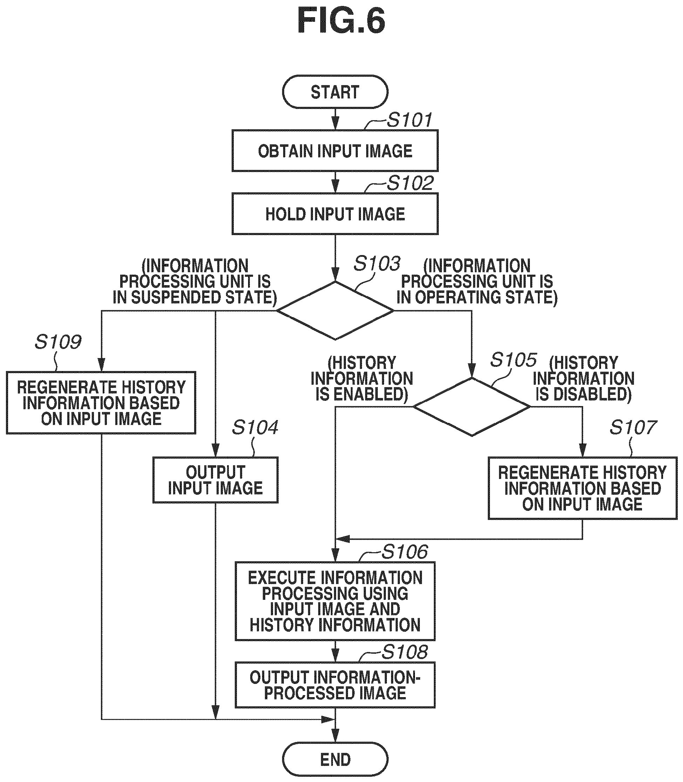

In step S103, if it is determined that the information processing unit 204 is suspended, as illustrated in Fig. 6, the image processing apparatus 10 can execute the processing of step S109 in parallel with the processing of step S104.

In step S109, the history information holding unit 203 executes processing similar to the processing of step S107. Specifically, the history information holding unit 203 regenerates history information based on the input image held in the input image holding unit 202, and updates history information held in the history information holding unit 203. If an identifier is assigned to the input image, the history information holding unit 203 assigns the identifier assigned to the input image to the regenerated history information.

One of the reasons for causing the information processing unit 204 to be suspended is that the information processing unit 204 be suspended at unnecessary times, reducing the power consumption of the image processing apparatus 10. Thus, in the processing of step S109, the image processing apparatus 10 desirably executes the processing with reduced power consumption.

As a method for reducing the power consumption in step S109, for example, the regeneration processing in step S109 is performed by a lighter-weight method (i.e. less compute-intensive method) than the method of regenerating history information used in the processing of step S107 as illustrated in Fig. 5. In this case, the regeneration of history information in step S109 is performed by a lighter-weight method than the regeneration of history information in step S107.

Examples of lighter-weight methods include machine learning and a neural network. Examples of machine learning methods include a decision tree, random forest, and LightGBM.

Examples of neural networks include a convolutional neural network, a deconvolutional neural network, and an auto encoder in which a convolutional neural network and a deconvolutional neural network are connected.

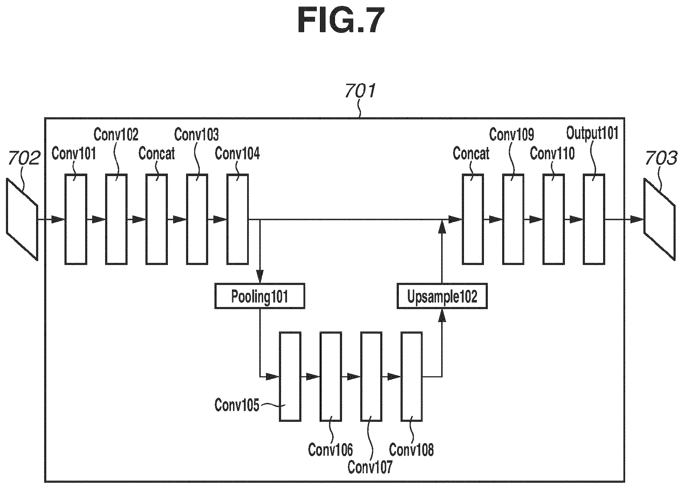

Fig. 7 illustrates an example where a neural network 701 is used, as a light-weight method. In the neural network 701 illustrated in the example of Fig. 7, "Conv" represents a convolutional layer, "Pooling" represents a pooling layer, "Upsample" represents an upsampling layer, "Concat" represents a connection layer, and "Output" represents an output layer.

In the example illustrated in Fig. 7, an input image 702 held in the input image holding unit 202 is input to the neural network 701.

When the input image 702 is input to the Conv 101 of the neural network 701, calculation processing is executed based on a processing procedure illustrated in Fig. 7.

After a completion of processing on the neural network 701, updated history information 703 is output from the Output 101 of the neural network 701.

In the example illustrated in Fig. 7, the neural network 701 is a part of the neural network 501 illustrated in Fig. 5. However, the configuration of the neural network 701 is not limited to this example. The method can be light weighted through distillation and quantization, or a neural network having a completely different structure can be used.

In step S109, the history information holding unit 203 can regenerate history information using the neural network 701.

Another example of the method for reducing the power consumption in step S109 is a method that uses a device with less power than in normal operation as the calculation device 13 of the image processing apparatus 10. In this case, the regeneration of history information in step S109 is executed by a device with less power consumption than that in the regeneration of history information in step S107. To enable a power-saving device to execute the processing, a light-weight method, such as distillation or quantization, can also be used.

In some embodiments, one of a plurality of methods with different power consumptions can be selected to use depending on the remaining amount of a battery or the remaining amount of fuel for a generator.

For example, with a large amount of remaining charge of a battery or remaining fuel of a generator, history information can be regenerated at high accuracy by a method with a large number of calculations. With a less amount, the method can be gradually changed to a light-weight method, such as the use of a power-saving device. With a further less amount, the processing of step S109 can be stopped.

With the information processing unit 204 out of operation and the processing of step S109 being not executed in parallel with the processing of step S104, the history information is not older with a longer period in which the processing is stopped.

When the information processing unit 204 is caused to be in operation in this state, and it is determined that the history information is unavailable in step S105, the processing of step S107 and the processing of step S106 are executed in sequence, and available history information is regenerated in step S107.

Another example of the method for determining whether to execute the processing of step S109 in parallel with the processing of step S104 as illustrated in Fig. 6 is a method using an operation of a user interface.

For example, supposing a case where whether to cause the information processing unit 204 to be suspended or in operation is switched by a user operation via the input device 14 or the I/F device 16 of the image processing apparatus 10.

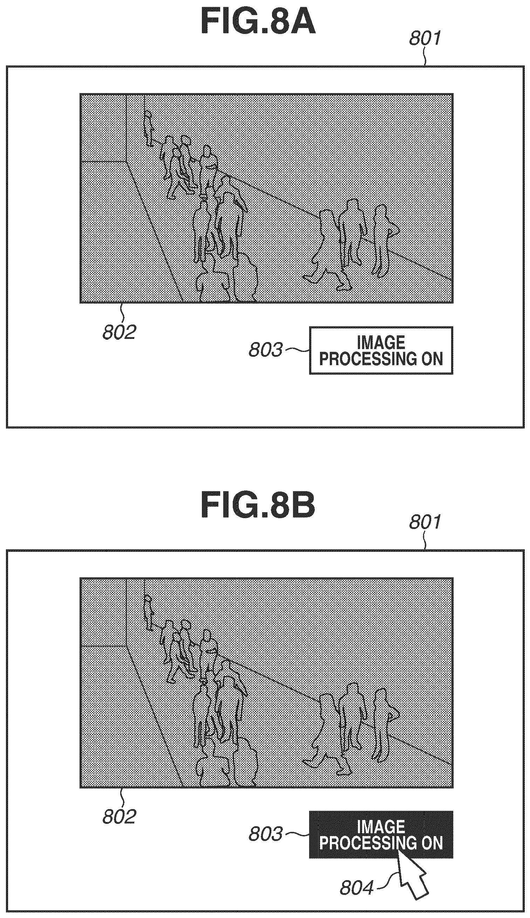

For example, supposing a user interface as illustrated in Fig. 8A is used. In an example illustrated in Fig. 8A, an information-processed image 802 output from the information processing unit 204 and a user interface 803 for causing the information processing unit 204 to be in operation from suspended are displayed on a screen 801.

In the example illustrated in Fig. 8A, with the information processing unit 204 being suspended, the information processing unit 204 can be caused to be in operation by the user interface 803 being operated by clicking.

Fig. 8B illustrates a state where the user operates a cursor 804 to place it on the user interface 803 and focuses the cursor 804 on the user interface 803 to operate the user interface 803 with a click or another operation.

In the example illustrated in Fig. 8B, the color of an "image processing on" button illustrated in Fig. 8B is different from that illustrated in Fig. 8A so as to indicate that the user interface 803 is focused.

When the user interface 803 for causing the information processing unit 204 to be in operation from suspended is focused by the user operation illustrated in Fig. 8B, it is highly likely that a click operation or other operations will be performed on the user interface 803 after the user operation, causing the information processing unit 204 to be in operation.

Thus, with the information processing unit 204 being suspended, as illustrated in Fig. 8B, the processing of step S109 can be started in parallel with the processing of step S 104 illustrated in Fig. 6 in response to when the user interface 803 is focused.

In the state illustrated in Fig. 8B, a click operation or another operation is performed after the user interface 803 for causing the information processing unit 204 to be in operation from suspended is focused and the information processing unit 204 is caused to be in operation from suspended.

The processing of step S109 here is completed before the information processing unit 204 is caused to be in operation after the user interface 803 is focused.

After the completion of the processing of step S109, the history information held in the history information holding unit 203 is updated with the latest history information. Thus, when the information processing unit 204 is caused to be in operation, it is determined that the history information is available in step S105, and the processing of step S106 can be executed immediately without additional overhead.

In step S108, the output unit 205 outputs the information-processed image generated by the information processing unit 204 in step S 106. If an identifier is assigned to the output image, the output unit 205 can output the identifier and the image at once.

The output unit 205 can present the processing result to the user via the output device 15 of the image processing apparatus 10, or to another terminal via the I/F device 16.

While the present embodiment illustrates image processing as an example of information processing, the information processing is not limited to image processing alone. Examples of the information processing include a behavior recognition, an orientation estimation, a falling detection, tracking, and a flow rate estimation.

As described above, according to the present embodiment, when the image processing apparatus 10 temporarily stops RNN processing of the information processing unit 204 and causes the information processing unit 204 to be in operation again, with history information unavailable, appropriate history information is regenerated. This feature makes it possible to make full use of the performance of the RNN immediately when the RNN processing is resumed, causing no screen flicker or deterioration in the image processing accuracy, preventing a target to be monitored from being missed during the image processing on a moving image due to screen flicker or deteriorated accuracy.

Furthermore, the image processing apparatus 10 can stop and resume processing without degrading the RNN processing performance of the information processing unit 204, which eliminates the need that the information processing unit 204 be constantly in operation to keep the RNN processing performance of the information processing unit 204, reducing the power consumption of the image processing apparatus 10. Consequently, the image processing apparatus 10 can be used for a long period of time even under the environment in which a battery or a generator is used.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc^{™} (BD)), a flash memory device, a memory card, and the like.

While the present invention has been described with reference to embodiments, it is to be understood that the invention is not limited to the disclosed embodiments, but is defined by the scope of the following claims.

## Claims

1. An image processing apparatus (10) comprising:
an information processing unit (204); and
an output unit (205),
wherein in a case where the information processing unit (204) is in operation and history information held in a history information holding unit (203) is available, the information processing unit (204) is configured to execute information processing using an input image and the history information held in the history information holding unit (203) to generate an information-processed image, and update the history information held in the history information holding unit (203), and the output unit (205) is configured to output the information-processed image,
wherein in a case where the information processing unit (204) is in operation and the history information held in the history information holding unit (203) is unavailable, the information processing unit (204) is configured to regenerate history information based on the input image, execute information processing using the input image and the regenerated history information to generate an information-processed image, and update the history information held in the history information holding unit (203), and the output unit (205) is configured to output the information-processed image,
the image processing apparatus (10) being **characterised in that**
in a case where the information processing unit (204) is suspended, the output unit (205) is configured to output the input image,
**in that** the case where the history information held in the history information holding unit (203) is available corresponds to a case where the history information held in the history information holding unit (203) is history information about a frame that is less than a threshold number of frames before a current frame, and
**in that** the case where the history information held in the history information holding unit (203) is unavailable corresponds to a case where the history information held in the history information holding unit (203) is history information about a frame that is equal to or greater than the threshold number of frames before the current frame.

2. The image processing apparatus (10) according to claim 1, wherein in a case where no history information is held in the history information holding unit (203), the history information is determined to be unavailable.

3. The image processing apparatus (10) according to claim 1 or 2, wherein in a case where the history information held in the history information holding unit (203) cannot be updated, the history information holding unit (203) is configured to delete the history information.

4. The image processing apparatus (10) according to any one of claims 1 to 3,
wherein the history information holding unit (203) is configured to hold an update flag indicating that the history information is to be updated or that the history information is not to be updated, and
wherein with reference to the update flag, in a case where the history information is to be updated, the history information is determined to be unavailable, and in a case where the history information is not to be updated, the history information is determined to be available.

5. The image processing apparatus (10) according to any one of claims 1 to 4, wherein in a case where the information processing unit (204) is in operation and the history information held in the history information holding unit (203) is unavailable, the output unit (205) is configured to output the input image in parallel with the regeneration of history information by the information processing unit (204).

6. The image processing apparatus (10) according to any one of claims 1 to 5, wherein in a case where the information processing unit (204) is suspended, the history information holding unit (203) is configured to regenerate history information based on the input image and update the history information held in the history information holding unit (203) in parallel with the output of the input image by the output unit (205).

7. The image processing apparatus (10) according to any one of claims 1 to 6, wherein the history information indicates an image subjected to information processing performed by the information processing unit (204).

8. The image processing apparatus (10) according to any one of claims 1 to 7, wherein an input image holding unit (202) is configured to hold the input image.

9. The image processing apparatus (10) according to claim 8, wherein the input image holding unit (202) is configured to hold at least a number of input images to be used for the information processing unit (204) to regenerate history information.

10. The image processing apparatus (10) according to claim 8 or 9, wherein the input image holding unit (202) is configured to hold at least a number of input images corresponding to a number of latencies in the information processing unit (204).

11. The image processing apparatus (10) according to claim 6, wherein in a case where the information processing unit (204) is suspended and a user interface for causing the information processing unit (204) to be in operation from being suspended is focused, the history information holding unit (203) is configured to start processing of regenerating history information based on the input image in parallel with the output of the input image by the output unit (205).

12. The image processing apparatus (10) according to claim 6, wherein the history information holding unit (203) is configured to perform regeneration of history information (203) by a lighter-weight method than the regeneration of history information by the information processing unit (204).

13. The image processing apparatus (10) according to claim 6, wherein the regeneration of history information by the history information holding unit (203) is configured to be performed by a device with less power consumption than in the regeneration of history information by the information processing unit (204).

14. The image processing apparatus (10) according to any one of claims 1 to 13, wherein the information processing is noise removal processing, super-resolution processing, sharpening processing, fog/haze removal processing, and dark area emphasis processing.

15. The image processing apparatus (10) according to any one of claims 1 to 14, wherein the information processing unit (204) is configured to execute the information processing using a recurrent neural network.

16. The image processing apparatus (10) according to claim 6, wherein the history information holding unit (203) is configured to execute the regeneration of history information using a neural network.

17. A processing method for an image processing apparatus (10), comprising:
executing, by an information processing unit (204), information processing using an input image and history information held in a history information holding unit (203), in a case where the information processing unit (204) is in operation and the history information held in the history information holding unit (203) is available, to generate an information-processed image, updating, by the information processing unit (204), the history information held in the history information holding unit (203), and outputting, by an output unit (205), the information-processed image;
regenerating, by the information processing unit (204), history information based on the input image, in a case where the information processing unit (204) is in operation and the history information held in the history information holding unit (203) is unavailable, executing, by the information processing unit (204), information processing using the input image and the regenerated history information to generate an information-processed image, updating, by the information processing unit (204), the history information held in the history information holding unit (203), and outputting, by the output unit (205), the information-processed image;
the processing method being **characterised in that** it comprises
outputting, by the output unit (205), the input image in a case where the information processing unit (204) is suspended,
**in that** the case where the history information held in the history information holding unit (203) is available corresponds to a case where the history information held in the history information holding unit (203) is history information about a frame that is less than a threshold number of frames before a current frame, and
**in that** the case where the history information held in the history information holding unit (203) is unavailable corresponds to a case where the history information held in the history information holding unit (203) is history information about a frame that is equal to or greater than the threshold number of frames before the current frame.

18. A computer program comprising instructions which, when executed by a computer, cause the computer to carry out the method according to claim 17.

## Patentansprüche

1. Bildverarbeitungsvorrichtung (10), umfassend:
eine Informationsverarbeitungseinheit (204); und
eine Ausgabeeinheit (205),
wobei, falls die Informationsverarbeitungseinheit (204) in Betrieb ist und in einer Verlaufsinformationsspeichereinheit (203) gespeicherte Verlaufsinformationen verfügbar sind, die Informationsverarbeitungseinheit (204) konfiguriert ist, Informationsverarbeitung unter Verwendung eines Eingabebilds und der in der Verlaufsinformationsspeichereinheit (203) gespeicherten Verlaufsinformationen auszuführen, um ein Bild zu erzeugen, an dem Informationsverarbeitung durchgeführt wurde, und die in der Verlaufsinformationsspeichereinheit (203) gespeicherten Verlaufsinformationen zu aktualisieren, und die Ausgabeeinheit (205) konfiguriert ist, das Bild auszugeben, an dem Informationsverarbeitung durchgeführt wurde,
wobei, falls die Informationsverarbeitungseinheit (204) in Betrieb ist und die in der Verlaufsinformationsspeichereinheit (203) gespeicherten Verlaufsinformationen nicht verfügbar sind, die Informationsverarbeitungseinheit (204) konfiguriert ist, Verlaufsinformationen basierend auf dem Eingabebild wiederherzustellen, Informationsverarbeitung unter Verwendung des Eingabebilds und der wiederhergestellten Verlaufsinformationen auszuführen, um ein Bild zu erzeugen, an dem Informationsverarbeitung durchgeführt wurde, und die in der Verlaufsinformationsspeichereinheit (203) gespeicherten Verlaufsinformationen zu aktualisieren, und die Ausgabeeinheit (205) konfiguriert ist, das Bild auszugeben, an dem Informationsverarbeitung durchgeführt wurde,
wobei die Bildverarbeitungsvorrichtung (10) **dadurch gekennzeichnet ist, dass**
die Ausgabeeinheit (205) konfiguriert ist, das Eingabebild auszugeben, falls die Informationsverarbeitungseinheit (204) angehalten ist;
dadurch, dass der Fall, in dem die in der Verlaufsinformationsspeichereinheit (203) gespeicherten Verlaufsinformationen verfügbar sind, einem Fall entspricht, in dem die in der Verlaufsinformationsspeichereinheit (203) gespeicherten Verlaufsinformationen Verlaufsinformationen über ein Frame sind, das weniger als eine Schwellenanzahl Frames vor dem aktuellen Frame liegt, und
dadurch, dass der Fall, in dem die in der Verlaufsinformationsspeichereinheit (203) gespeicherten Verlaufsinformationen nicht verfügbar sind, einem Fall entspricht, in dem die in der Verlaufsinformationsspeichereinheit (203) gespeicherten Verlaufsinformationen Verlaufsinformationen über ein Frame sind, das die Schwellenanzahl oder mehr Frames vor dem aktuellen Frame liegt.

2. Bildverarbeitungsvorrichtung (10) nach Anspruch 1, wobei, falls keine Verlaufsinformationen in der Verlaufsinformationsspeichereinheit (203) gespeichert sind, bestimmt wird, dass die Verlaufsinformationen nicht verfügbar sind.

3. Bildverarbeitungsvorrichtung (10) nach Anspruch 1 oder 2, wobei, falls die in der Verlaufsinformationsspeichereinheit (203) gespeicherten Verlaufsinformationen nicht aktualisiert werden können, die Verlaufsinformationsspeichereinheit (203) konfiguriert ist, die Verlaufsinformationen zu löschen.

4. Bildverarbeitungsvorrichtung (10) nach einem der Ansprüche 1 bis 3,
wobei die Verlaufsinformationsspeichereinheit (203) konfiguriert ist, ein Aktualisierungsflag zu speichern, das angibt, dass die Verlaufsinformationen zu aktualisieren sind oder dass die Verlaufsinformationen nicht zu aktualisieren sind, und
wobei unter Bezugnahme auf das Aktualisierungsflag bestimmt wird, dass die Verlaufsinformationen nicht verfügbar sind, falls die Verlaufsinformationen zu aktualisieren sind, und bestimmt wird, dass die Verlaufsinformationen verfügbar sind, falls die Verlaufsinformationen nicht zu aktualisieren sind.

5. Bildverarbeitungsvorrichtung (10) nach einem der Ansprüche 1 bis 4, wobei, falls die Informationsverarbeitungseinheit (204) in Betrieb ist und die in der Verlaufsinformationsspeichereinheit (203) gespeicherten Verlaufsinformationen nicht verfügbar sind, die Ausgabeeinheit (205) konfiguriert ist, das Eingabebild parallel zur Wiederherstellung von Verlaufsinformationen durch die Informationsverarbeitungseinheit (204) auszugeben.

6. Bildverarbeitungsvorrichtung (10) nach einem der Ansprüche 1 bis 5, wobei, falls die Informationsverarbeitungseinheit (204) angehalten ist, die Verlaufsinformationsspeichereinheit (203) konfiguriert ist, Verlaufsinformationen basierend auf dem Eingabebild wiederherzustellen und die in der Verlaufsinformationsspeichereinheit (203) gespeicherten Verlaufsinformationen parallel zur Ausgabe des Eingabebilds durch die Ausgabeeinheit (205) zu aktualisieren.

7. Bildverarbeitungsvorrichtung (10) nach einem der Ansprüche 1 bis 6, wobei die Verlaufsinformationen ein Bild angeben, das einer durch die Informationsverarbeitungseinheit (204) durchgeführten Informationsverarbeitung unterzogen wurde.

8. Bildverarbeitungsvorrichtung (10) nach einem der Ansprüche 1 bis 7, wobei eine Eingabebildspeichereinheit (202) konfiguriert ist, das Eingabebild zu speichern.

9. Bildverarbeitungsvorrichtung (10) nach Anspruch 8, wobei die Eingabebildspeichereinheit (202) konfiguriert ist, mindestens eine Anzahl von Eingabebildern zur Verwendung durch die Informationsverarbeitungseinheit (204) zum Wiederherstellen von Verlaufsinformationen zu speichern.

10. Bildverarbeitungsvorrichtung (10) nach Anspruch 8 oder 9, wobei die Eingabebildspeichereinheit (202) konfiguriert ist, mindestens eine Anzahl von Eingabebildern entsprechend einer Anzahl von Latenzen in der Informationsverarbeitungseinheit (204) zu speichern.

11. Bildverarbeitungsvorrichtung (10) nach Anspruch 6, wobei, falls die Informationsverarbeitungseinheit (204) angehalten ist und eine Benutzerschnittstelle zum Veranlassen der Informationsverarbeitungseinheit (204), aus dem angehaltenen Zustand in Betrieb zu gehen, fokussiert ist, die Verlaufsinformationsspeichereinheit (203) konfiguriert ist, eine Verarbeitung zum Wiederherstellen von Verlaufsinformationen basierend auf dem Eingabebild parallel zur Ausgabe des Eingabebilds durch die Ausgabeeinheit (205) zu starten.

12. Bildverarbeitungsvorrichtung (10) nach Anspruch 6, wobei die Verlaufsinformationsspeichereinheit (203) konfiguriert ist, Wiederherstellung von Verlaufsinformationen (203) durch ein schlankeres Verfahren als die Wiederherstellung von Verlaufsinformationen durch die Informationsverarbeitungseinheit (204) durchzuführen.

13. Bildverarbeitungsvorrichtung (10) nach Anspruch 6, wobei die Wiederherstellung von Verlaufsinformationen durch die Verlaufsinformationsspeichereinheit (203) konfiguriert ist, durch eine Vorrichtung mit weniger Stromverbrauch als bei der Wiederherstellung von Verlaufsinformationen durch die Informationsverarbeitungseinheit (204) durchgeführt zu werden.

14. Bildverarbeitungsvorrichtung (10) nach einem der Ansprüche 1 bis 13, wobei die Informationsverarbeitung eine Rauschentfernungsverarbeitung, eine Superauflösungsverarbeitung, eine Schärfungsverarbeitung, eine Nebel- /Trübungsentfernungsverarbeitung und eine Dunkelbereichshervorhebungsverarbeitung ist.

15. Bildverarbeitungsvorrichtung (10) nach einem der Ansprüche 1 bis 14, wobei die Informationsverarbeitungseinheit (204) konfiguriert ist, die Informationsverarbeitung unter Verwendung eines rekurrenten neuronalen Netzes auszuführen.

16. Bildverarbeitungsvorrichtung (10) nach Anspruch 6, wobei die Verlaufsinformationsspeichereinheit (203) konfiguriert ist, die Wiederherstellung von Verlaufsinformationen unter Verwendung eines neuronalen Netzes auszuführen.

17. Verarbeitungsverfahren für eine Bildverarbeitungsvorrichtung (10), umfassend:
Ausführen, durch eine Informationsverarbeitungseinheit (204), von Informationsverarbeitung unter Verwendung eines Eingabebilds und von in einer Verlaufsinformationsspeichereinheit (203) gespeicherten Verlaufsinformationen, falls die Informationsverarbeitungseinheit (204) in Betrieb ist und die in der Verlaufsinformationsspeichereinheit (203) gespeicherten Verlaufsinformationen verfügbar sind, um ein Bild zu erzeugen, an dem Informationsverarbeitung durchgeführt wurde, Aktualisieren, durch die Informationsverarbeitungseinheit (204), der in der Verlaufsinformationsspeichereinheit (203) gespeicherten Verlaufsinformationen und Ausgeben, durch eine Ausgabeeinheit (205), des Bilds, an dem Informationsverarbeitung durchgeführt wurde;
Wiederherstellen, durch die Informationsverarbeitungseinheit (204), von Verlaufsinformationen basierend auf dem Eingabebild, falls die Informationsverarbeitungseinheit (204) in Betrieb ist und die in der Verlaufsinformationsspeichereinheit (203) gespeicherten Verlaufsinformationen nicht verfügbar sind, Ausführen, durch die Informationsverarbeitungseinheit (204), einer Informationsverarbeitung unter Verwendung des Eingabebilds und der wiederhergestellten Verlaufsinformationen, um ein Bild zu erzeugen, an dem Informationsverarbeitung durchgeführt wurde, Aktualisieren, durch die Informationsverarbeitungseinheit (204), der in der Verlaufsinformationsspeichereinheit (203) gespeicherten Verlaufsinformationen und Ausgeben, durch die Ausgabeeinheit (205), des Bilds, an dem Informationsverarbeitung durchgeführt wurde;
wobei das Verarbeitungsverfahren **dadurch gekennzeichnet ist, dass** es umfasst:
Ausgeben, durch die Ausgabeeinheit (205), des Eingabebilds, falls die Informationsverarbeitungseinheit (204) angehalten ist,
dadurch, dass der Fall, in dem die in der Verlaufsinformationsspeichereinheit (203) gespeicherten Verlaufsinformationen verfügbar sind, einem Fall entspricht, in dem die in der Verlaufsinformationsspeichereinheit (203) gespeicherten Verlaufsinformationen Verlaufsinformationen über ein Frame sind, das weniger als eine Schwellenanzahl Frames vor dem aktuellen Frame liegt, und
dadurch, dass der Fall, in dem die in der Verlaufsinformationsspeichereinheit (203) gespeicherten Verlaufsinformationen nicht verfügbar sind, einem Fall entspricht, in dem die in der Verlaufsinformationsspeichereinheit (203) gespeicherten Verlaufsinformationen Verlaufsinformationen über ein Frame sind, das die Schwellenanzahl oder mehr Frames vor dem aktuellen Frame liegt.

18. Computerprogramm, umfassend Anweisungen, die, wenn sie durch einen Computer ausgeführt werden, den Computer veranlassen, das Verfahren nach Anspruch 17 auszuführen.

## Revendications

1. Appareil de traitement d'image (10) comprenant :
une unité de traitement d'informations (204) ; et
une unité de sortie (205),
dans lequel dans un cas où l'unité de traitement d'informations (204) est en fonctionnement et des informations historiques conservées dans une unité de conservation d'informations historiques (203) sont disponibles, l'unité de traitement d'informations (204) est configurée pour exécuter un traitement d'informations à l'aide d'une image d'entrée et des informations historiques conservées dans l'unité de conservation d'informations historiques (203) pour générer une image à informations traitées, et mettre à jour les informations historiques conservées dans l'unité de conservation d'informations historiques (203), et l'unité de sortie (205) est configuré pour délivrer en sortie l'image à informations traitées,
dans lequel dans un cas où l'unité de traitement d'informations (204) est en fonctionnement et les informations historiques conservées dans l'unité de conservation d'informations historiques (203) sont indisponibles, l'unité de traitement d'informations (204) est configurée pour régénérer des informations historiques sur la base de l'image d'entrée, exécuter un traitement d'informations à l'aide de l'image d'entrée et des informations historiques régénérées pour générer une image à informations traitées, et mettre à jour les informations historiques conservées dans l'unité de conservation d'informations historiques (203), et l'unité de sortie (205) est configurée pour délivrer en sortie l'image à informations traitées,
l'appareil de traitement d'image (10) étant **caractérisé en ce que**
dans un cas où l'unité de traitement d'informations (204) est suspendue, l'unité de sortie (205) est configurée pour délivrer en sortie l'image d'entrée,
**en ce que** le cas où les informations historiques conservées dans l'unité de conservation d'informations historiques (203) sont disponibles correspond à un cas où les informations historiques conservées dans l'unité de conservation d'informations historiques (203) sont des informations historiques concernant une trame qui est inférieure à un nombre seuil de trames avant une trame actuelle, et
**en ce que** le cas où les informations historiques conservées dans l'unité de conservation d'informations historiques (203) sont indisponibles correspond à un cas où les informations historiques conservées dans l'unité de conservation d'informations historiques (203) sont des informations historiques concernant une trame qui est égale ou supérieure au nombre seuil de trames avant la trame actuelle.

2. Appareil de traitement d'image (10) selon la revendication 1, dans lequel dans un cas où aucune information historique n'est conservée dans l'unité de conservation d'informations historiques (203), les informations historiques sont déterminées comme étant indisponibles.

3. Appareil de traitement d'image (10) selon la revendication 1 ou 2, dans lequel, dans un cas où les informations historiques conservées dans l'unité de conservation d'informations historiques (203) ne peuvent pas être mises à jour, l'unité de conservation d'informations historiques (203) est configurée pour supprimer les informations historiques.

4. Appareil de traitement d'image (10) selon l'une quelconque des revendications 1 à 3,
dans lequel l'unité de conservation d'informations historiques (203) est configurée pour conserver un drapeau de mise à jour indiquant que les informations historiques doivent être mises à jour ou que les informations historiques ne doivent pas être mises à jour, et
dans lequel, en référence au drapeau de mise à jour, dans un cas où les informations historiques doivent être mises à jour, les informations historiques sont déterminées comme étant indisponibles, et dans un cas où les informations historiques ne doivent pas être mises à jour, les informations historiques sont déterminées comme étant disponibles.

5. Appareil de traitement d'image (10) selon l'une quelconque des revendications 1 à 4, dans lequel dans un cas où l'unité de traitement d'informations (204) est en fonctionnement et les informations historiques conservées dans l'unité de conservation d'informations historiques (203) sont indisponibles, l'unité de sortie (205) est configurée pour délivrer en sortie l'image d'entrée en parallèle de la régénération d'informations historiques par l'unité de traitement d'informations (204).

6. Appareil de traitement d'image (10) selon l'une quelconque des revendications 1 à 5, dans lequel dans un cas où l'unité de traitement d'informations (204) est suspendue, l'unité de conservation d'informations historiques (203) est configurée pour régénérer des informations historiques sur la base de l'image d'entrée et mettre à jour les informations historiques conservées dans l'unité de conservation d'informations historiques (203) en parallèle de la sortie de l'image d'entrée par l'unité de sortie (205).

7. Appareil de traitement d'image (10) selon l'une quelconque des revendications 1 à 6, dans lequel les informations historiques indiquent une image soumise à un traitement d'informations réalisé par l'unité de traitement d'informations (204).

8. Appareil de traitement d'image (10) selon l'une quelconque des revendications 1 à 7, dans lequel une unité de conservation d'images d'entrée (202) est configurée pour conserver l'image d'entrée.

9. Appareil de traitement d'image (10) selon la revendication 8, dans lequel l'unité de conservation d'images d'entrée (202) est configurée pour conserver au moins un nombre d'images d'entrée devant être utilisées pour que l'unité de traitement d'informations (204) régénère des informations historiques.

10. Appareil de traitement d'image (10) selon la revendication 8 ou 9, dans lequel l'unité de conservation d'images d'entrée (202) est configurée pour conserver au moins un nombre d'images d'entrée correspondant à un nombre de latences dans l'unité de traitement d'informations (204).

11. Appareil de traitement d'image (10) selon la revendication 6, dans lequel dans un cas où l'unité de traitement d'informations (204) est suspendue et une interface utilisateur permettant d'amener l'unité de traitement d'informations (204) à être en fonctionnement depuis l'état suspendu est ciblée, l'unité de conservation d'informations historiques (203) est configurée pour démarrer le traitement de la régénération d'informations historiques sur la base de l'image d'entrée en parallèle de la sortie de l'image d'entrée par l'unité de sortie (205).

12. Appareil de traitement d'image (10) selon la revendication 6, dans lequel l'unité de conservation d'informations historiques (203) est configurée pour réaliser une régénération d'informations historiques (203) par un procédé à pondération plus légère que la régénération d'informations historiques par l'unité de traitement d'informations (204).

13. Appareil de traitement d'image (10) selon la revendication 6, dans lequel la régénération d'informations historiques par l'unité de conservation d'informations historiques (203) est configurée pour être réalisée par un dispositif ayant une consommation d'énergie moindre que lors de la régénération d'informations historiques par l'unité de traitement d'informations (204).

14. Appareil de traitement d'image (10) selon l'une quelconque des revendications 1 à 13, dans lequel le traitement d'informations est un traitement d'élimination de bruit, un traitement de super-résolution, un traitement de netteté, un traitement d'élimination de brouillard/brume et un traitement d'accentuation de zone sombre.

15. Appareil de traitement d'image (10) selon l'une quelconque des revendications 1 à 14, dans lequel l'unité de traitement d'informations (204) est configurée pour exécuter le traitement d'informations à l'aide d'un réseau de neurones récurrent.

16. Appareil de traitement d'image (10) selon la revendication 6, dans lequel l'unité de conservation d'informations historiques (203) est configurée pour exécuter la régénération d'informations historiques à l'aide d'un réseau de neurones.

17. Procédé de traitement pour un appareil de traitement d'image (10), comprenant : l'exécution, par une unité de traitement d'informations (204), d'un traitement d'informations à l'aide d'une image d'entrée et d'informations historiques conservées dans une unité de conservation d'informations historiques (203), dans un cas où l'unité de traitement d'informations (204) est en fonctionnement et les informations historiques conservées dans l'unité de conservation d'informations historiques (203) sont disponibles, pour générer une image à informations traitées, la mise à jour, par l'unité de traitement d'informations (204), des informations historiques conservées dans l'unité de conservation d'informations historiques (203), et la sortie, par une unité de sortie (205), de l'image à informations traitées ; la régénération, par l'unité de traitement d'informations (204), d'informations historiques sur la base de l'image d'entrée, dans un cas où l'unité de traitement d'informations (204) est en fonctionnement et les informations historiques conservées dans l'unité de conservation d'informations historiques (203) sont indisponibles, l'exécution, par l'unité de traitement d'informations (204), d'un traitement d'informations à l'aide de l'image d'entrée et des informations historiques régénérées pour générer une image à informations traitées, la mise à jour, par l'unité de traitement d'informations (204), des informations historiques conservées dans l'unité de conservation d'informations historiques (203), et la sortie, par l'unité de sortie (205), de l'image à informations traitées ;
le procédé de traitement étant **caractérisé en ce qu'**il comprend
la sortie, par l'unité de sortie (205), de l'image d'entrée dans un cas où l'unité de traitement d'informations (204) est suspendue,
**en ce que** le cas où les informations historiques conservées dans l'unité de conservation d'informations historiques (203) sont disponibles correspond à un cas où les informations historiques conservées dans l'unité de conservation d'informations historiques (203) sont des informations historiques concernant une trame qui est inférieure à un nombre seuil de trames avant une trame actuelle, et
**en ce que** le cas où les informations historiques conservées dans l'unité de conservation d'informations historiques (203) sont indisponibles correspond à un cas où les informations historiques conservées dans l'unité de conservation d'informations historiques (203) sont des informations historiques concernant une trame qui est égale ou supérieure au nombre seuil de trames avant la trame actuelle.

18. Programme d'ordinateur comprenant des instructions qui, lorsqu'elles sont exécutées par un ordinateur, amènent l'ordinateur à réaliser le procédé selon la revendication 17.
